(19) Europäisches Patentamt

European Patent Office

Office européen des brevets

(11) EP 0 626 527 B1

(12) EUROPÄISCHE PATENTSCHRIFT

(45) Veröffentlichungstag und Bekanntmachung des Hinweises auf die Patenterteilung:
19.08.1998 Patentblatt 1998/34

(51) Int Cl.6: F16H 61/02

(21) Anmeldenummer: 93108427.1

(22) Anmeldetag: 25.05.1993

(54) **Steuerung für ein automatisches Getriebe in einem Kraftfahrzeug**

Control of an automatic transmission in a vehicle

Commande d'une boîte de vitesse automatique dans un véhicule

(84) Benannte Vertragsstaaten:
DE FR GB

(43) Veröffentlichungstag der Anmeldung:
30.11.1994 Patentblatt 1994/48

(73) Patentinhaber: SIEMENS AKTIENGESELLSCHAFT
80333 München (DE)

(72) Erfinder: Graf, Friedrich, Dipl.-Ing.
W-8400 Regensburg (DE)

(56) Entgegenhaltungen:
EP-A- 339 462          EP-A- 375 155
EP-A- 406 615          EP-A- 471 102
EP-A- 622 570          EP-A- 0 304 089
EP-A- 0 503 948        EP-A- 0 532 363
WO-A-93/23689          DE-A- 3 341 652
US-A- 4 841 815

• PATENT ABSTRACTS OF JAPAN vol. 17, no. 186 (M-1395)(5815) 12. April 1993 & JP-A-4 337 157 ( MITSUBISHI MOTORS CORP. ) 25. November 1992
• A Method of Predicting the Driving Environment from the Driver's Operational Inputs; "Takahashi, Hiroshi", "IFSA", Brüssel (BE),//1991, 203 - 206

**Beschreibung**

Die Erfindung betrifft eine Steuerung für ein automatisches Getriebe in einem Kraftfahrzeug.

Bei bekannten Getriebesteuerungen für Kraftfahrzeuge wird die Übersetzung des Getriebes in Abhängigkeit von der Fahrpedalstellung und von der Fahrgeschwindigkeit anhand von abgespeicherten Kennfeldern automatisch eingestellt. Dabei werden außerdem der Lastzustand des Kraftfahrzeugs und der Fahrstil des Fahrers berücksichtigt (EP-A-0 471 102, DE-C-33 41 652). Bei einer anderen automatischen Getriebesteuerung wird von einem Grundkennfeld auf ein Sonderkennfeld umgeschaltet, wenn das Kraftfahrzeug durch schmale Straßen in Wohngebieten fährt (EP-B-0 339 462). Dieser Fahrzustand wird angenommen, wenn ein rechnerisch ermittelter sogenannter Korrelations-Koeffizient einen Grenzwert überschreitet. Das Sonderkennfeld hält dann den zweiten Gang fest und verhindert häufige Wechsel zwischen dem ersten und dem zweiten Gang. Der Korrelations-Koeffizient berücksichtigt den Umfang der Lenkbewegungen und die Anzahl der Bremsbetätigungen in einer bestimmten Zeit. Der zusätzliche Aufwand für eine beschränkte Aufgabe ist recht groß.

Bei weiteren bekannten automatischen Getriebesteuerungen (US-A-4 841 815, EP-A-0 375 155, A. Takahashi, Method of Predicting Driving Environment, IFSA 1991, Brüssel, S. 203 bis 206) erfolgt die Auswahl des jeweils zu schaltenden Ganges durch Steuerungen, die nach den Methoden der Fuzzy-Logik arbeiten. Mit dieser Logik wird Expertenwissen, das durch Erfahrung gewonnen worden ist, in Form einer sogenannten Regelbasis beschrieben und damit für die Regel- oder Steuervorgänge des Kraftfahrzeuggetriebes verwendet.

Um eine Steueraufgabe möglichst optimal zu lösen, kann es aber zweckmäßig sein, außer den genannten Einflußgrößen, auch die Art der jeweils von dem Kraftfahrzeug befahrenen Straße zu erkennen und bei der Ermittlung der Stellgröße zu berücksichtigen. Unter dem Begriff Straßenart oder dem Straßentyp, den das Kraftfahrzeug jeweils befährt, wird hier unterschieden, ob es sich um eine Stadtstraße, eine Landstraße oder eine Autobahn handelt, ob die Straße eher gerade oder ob sie kurvenreich ist und ob sie eben oder bergig ist, d.h. viele Steigungen und Gefälle aufweist.

Bekannt ist auch eine elektronische Motorsteuerung (EP-A-0 304 089) mit mehreren ersten Sensoren zum Erfassen von Bedienungshandlungen des Fahrers, mit mehreren zweiten Sensoren zum Erfassen des Betriebszustands von Fahrzeug und Motor und mit mehreren Aktoren zum Steuern des Motors. Eine Auswertung erkennt den Fahrstil des Fahrers anhand der Signale der ersten und der zweiten Sensoren und ein Steuergerät steuert den Motor gemäß dem erkannten Fahrstil, indem es mindestens einen Aktor daran anpaßt. Das Steuern des Motors geschieht in erster Linie dadurch, daß der Zündzeitpunkt und die Kraftstoffeinspritzung gesteuert werden. Ein Eingriff oder Beeinflussung der Getriebeübersetzung wird dabei nicht durchgeführt.

Eine ebenfalls bekannte Getriebesteuerung (EP-A-0 532 362) soll eine verbesserte Anpassung der Schaltung an den Fahrerwunsch bei einem automatischen Getriebe, ggf. bei einem stufenlosen Getriebe ermöglichen. Es erfolgt eine zweistufige Anwendung von Fuzzy-Logik-Auswertungen. In einer ersten Stufe erfolgt eine Erkennung des Fahrerwunsches, in einer zweiten Stufe erfolgt eine an den Fahrerwunsch angepaßte Schaltung.

Als Fahrbahninformation dient hier eine Information über eine Berg- oder Talfahrt des Kraftfahrzeugs, die ein Eingangsparameter der Fuzzy-Logik ist. Eine genaue und aussagekräftige Ermittlung von die Art der befahrenen Straße und den Verkehrsfluß charakterisierende Ausgangsvariablen findet hier nicht statt.

Bei einer anderen bekannten elektronischen Steuerung für ein Automatikgetriebe (EP-A-0 503 948), erfolgt die Gangauswahl unter Berücksichtigung der Fahrzeugeigenschaften, des Fahrerwunsches und des Straßenzustandes bei einer Fahrt in einem hügeligen Gelände, in dem ein häufiger Gangwechsel nötig ist. Es wird eine Minimierung der Häufigkeit der Gangwechsel und der Häufigkeit der Bremsvorgänge bei Talfahrt und die Verwendung eines möglichst kleinen Rechners angestrebt. In einer ersten Betriebsart erfolgt die Schaltpunktauswahl durch ein Kennfeld, in weiteren Betriebsarten durch eine Fuzzy-Inferenz. Beide Auswahlergebnisse werden miteinander verglichen und nur dann in den "Fuzzy-Gang" geschaltet, wenn er eine geringere Geschwindigkeit ergibt als der "Kennfeldgang". Die Auswahl der optimalen Gangposition mit der Fuzzy-Logik erfolgt unter Verwendung von fortlaufend aktualisierten Faktoren, die den Fahrerwunsch und die Straßeneigenschaften repräsentieren. Der Straßenzustand ist ein Parameter, der Eingangsgröße der Fuzzy-Logik ist und unmittelbar aus Sensorsignalen (Lenkwinkel und Querbeschleunigung) abgeleitet wird; er berücksichtigt mehrere Betriebsarten ("Modes"), wie z.B. "ebene Straßen in einem städtischen Bereich", "kurvenreiche Steigungsstrecke", "Gefällstrecke bei leichter Motorbremsung", "Gefällstrecke bei starker Motorbremsung" und "gerade Steigungsstrecke". Über diese Betriebsarten werden verschiedene Schaltkennfelder ausgewählt, mit denen die Gangstufe festgelegt wird.

Um den Schaltkomfort bei einem automatischen Getriebe zu verbessern und ein hektisches Hoch- und Rückschalten zu vermeiden, werden bei der Gangauswahl der Fahrerwunsch und die Straßenbedingungen berücksichtigt, und zwar sowohl beim Befahren unebener Fahrbahnen als auch bei einem ein häufiges Schalten erfordernden Schaltverkehr (JP-A-04 337 157). Bei einer Gangauswahl mit einem normalen Schaltkennfeld in Abhängigkeit von der Fahrzeuggeschwindigkeit und der Last wird ein Schaltvorgang durch eine Fuzzy-Inferenz auf der Grundlage zumindest einer Information über den Fahrzustand, den Fahrerwunsch und den Fahrbahnzustand ausgewählt. Lediglich dann, wenn der durch die Fuzzy-Inferenz festgelegte Gang kleiner als der durch das normale Kennfeld ausgewählte Gang ist, wird der durch die Fuzzy-Inferenz bestimmte Schaltvorgang durchgeführt. Auch hier ist die Information über den Fahrbahntyp eine Eingangsinformation für die Fuzzy-Logik, die in nicht sehr präziser Weise aus den Eingangssignalen abgeleitet wird.

In der EP-A-0 622 570, einer nicht vorveröffentlichen Anmeldung gemäß Artikel 54(3) EPÜ, ist eine Steuerung für ein automatisches Kraftfahrzeuggetriebe beschrieben, durch welche die Übersetzung des Getriebes in Abhängigkeit von der Fahrpedalstellung und der Fahrzeuggeschwindigkeit anhand von abgespeicherten Kennfeldern automatisch eingestellt wird. Die Steuerung berücksichtigt dabei außerdem den Lastzustand des Kraftfahrzeugs und den Fahrstil des Fahrers. Sie weist eine mit einer Regelbasis versehene Fuzzy-Logik auf, durch die zeitliche Mittelwerte oder Änderungen von Signalen, die Betriebszustände des Kraftfahrzeugs oder Fahrpedalbetätigungen wiedergeben, ausgewertet werden. Abhängig von dieser Auswertung wird ein zum Steuern der Schaltung oder zum Einstellen der Getriebeübersetzung verwendetes Kennfeld ausgewählt. Statt der Auswahl eines anderen Kennfeldes kann auch ein vorhandenes Kennfeld durch Verschieben von Kennlinien verändert werden. Die Längsdynamik des Kraftfahrzeugs berücksichtigende Parameter und den Verkehrsfluß charakterisierende Ausgangsvariable sind dabei nicht vorgesehen.

Der Erfindung liegt die Aufgabe zugrunde, eine Getriebesteuerung zu schaffen, die bei der Festlegung des günstigsten Getriebegangs im Kraftfahrzeug auch die Art und den Verlauf der befahrenen Straße sowie den Verkehrsfluß charakterisierende weitere Einflußgrößen berücksichtigt.

Diese Aufgabe wird erfindungsgemäß durch eine Steuerung nach Anspruch 1 gelöst. Vorteilhafte Weiterbildungen der Erfindung sind in den Unteransprüchen niedergelegt.

Die Vorteile der Erfindung liegen insbesondere in dem geringen Zusatzaufwand den sie erfordert. Es können alle Schaltungsbestandteile und Sensorsignale verwendet werden, die bei der Steuerung nach der älteren Patentanmeldung EP-A-0 622 570 bereits vorhanden sind. Darüber hinaus sind keine zusätzlichen Sensoren erforderlich, es müssen nur einige andere abgeleitete Signale aufbereitet werden.

Als Ausführungsbeispiel der Erfindung wird im folgenden eine Steuerung für ein automatisches Kraftfahrzeuggetriebe anhand der Zeichnung erläutert. Es zeigen:

Figur 1 die wesentlichen Bestandteile eines Kraftfahrzeugs mit einer erfindungsgemäßen Steuerung, in schematischer Darstellung,

Figur 2 die Getriebesteuerung des Kraftfahrzeugs nach Figur 1 als Blockdiagramm,

Figur 3 eine in der Fuzzy-Logik der Getriebesteuerung nach Fig. 2 verwendete Regelbasis "Straße",

Figur 4 zwei in der Fuzzy-Logik der Getriebesteuerung nach Fig. 2 verwendete Regelbasen "x-Dynamik" und "y-Dynamik",

Figur 5 eine in der Fuzzy-Logik der Getriebesteuerung nach Fig. 2 verwendete Regelbasis "z-Dynamik", und

Figur 6 eine in der Fuzzy-Logik der Getriebesteuerung nach Fig. 2 verwendete Zugehörigkeitsfunktion der Variablen "Straße".

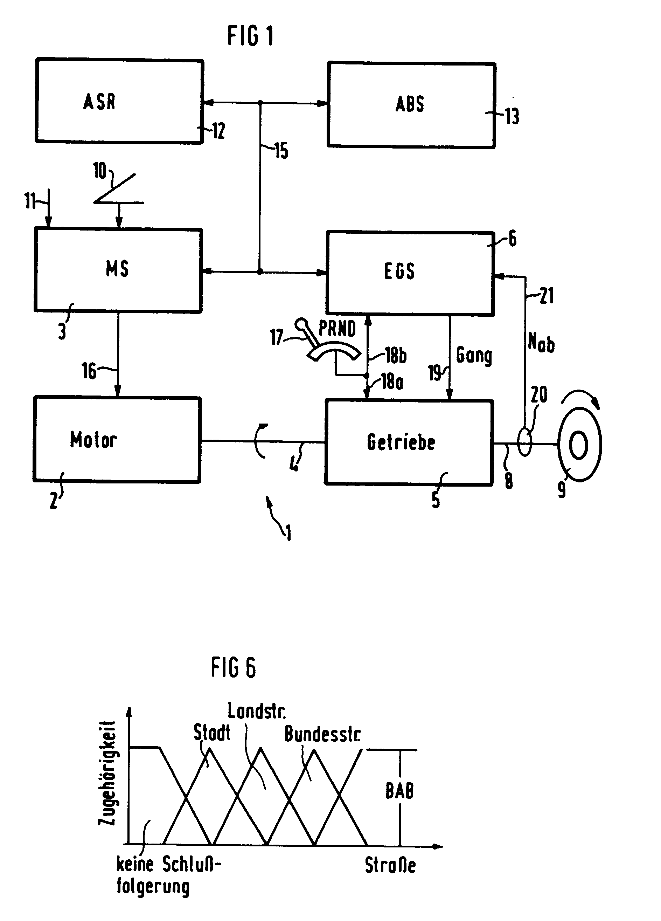

Ein schematisch dargestelltes Kraftfahrzeug 1 (Figur 1) weist einen Motor 2 auf, der von einer Motorsteuerung 3 gesteuert wird. Eine Motorabtriebswelle 4 ist über einen - hier nicht getrennt dargestellten - Drehmomentwandler mit einem automatischen Getriebe 5 verbunden, das von einer erfindungsgemäßen elektronischen Steuerung 6 gesteuert wird. Im nachfolgenden Ausführungsbeispiel ist das Getriebe 5 als Stufengetriebe ausgeführt, eine erfindungsgemäße Steuerung 6, läßt sich aber genauso gut für ein stufenloses Getriebe - oder zum Steuern der weiteren eingangs genannten Einrichtungen in einem Kraftfahrzeug - verwenden. Eine Getriebeabtriebswelle 8 ist mit der angetriebenen Achse des Kraftfahrzeugs verbunden, die hier durch ein angetriebenes Rad 9 symbolisiert wird.

Über ein Fahrpedal 10 gibt der Fahrer des Kraftfahrzeugs seine Befehle - genaugenommen sind es seine Wünsche - an die Motorsteuerung 3. Bei Betätigung des - hier nicht dargestellten - Bremspedals des Kraftfahrzeugs gelangt ein, z.B. von dem Bremslichtschalter erzeugtes, Bremssignal über eine Leitung 11 zu der Motorsteuerung 3. Das Kraftfahrzeug ist außerdem mit einer Radschlupf- oder Antischlupfregelung (ASR) 12 und einem Antiblockiersystem (ABS) 13 versehen, die durch Signalleitungen 15 untereinander sowie mit der Motorsteuerung 3 und der Getriebesteuerung 6 zwecks Austausch von Signalen verbunden sind. Über eine Signalleitung 16 sendet die Motorsteuerung 3 an den Motor 2 Signale, mit denen die Zündung, die Einspritzung und die Drosselklappe gesteuert werden (letztere nur, wenn eine entsprechende Steuereinrichtung vorhanden ist).

Über einen Wählhebel 17 bestimmt der Fahrer in üblicher Weise den Fahrbereich des automatischen Getriebes 5. Die Wählhebelsignale gelangen über eine mechanische Verbindung 18a zu dem Getriebe 5 und über eine elektrische Signalleitung 18b zu der Steuerung 6. Die Steuerung 6 sendet über eine Signalleitung 19 Steuersignale an das Getriebe 5, die den jeweiligen Getriebegang festlegen und die erforderlichen Schaltvorgänge steuern, oder - bei einem stufenlosen Getriebe - die jeweilige Übersetzung einstellen. Die Drehzahl der Getriebeabtriebswelle 8 wird von einem Drehzahlsensor 20 über eine Signalleitung 21 an die Steuerung 6 gemeldet. Zumindest die Signalleitungen 15, die die Steuergeräte 3, 6, 12 und 13 miteinander verbinden, können aus einzelnen Signalleitungen oder aus einem bidirektionalen Bus, z.B. aus einem bekannten CAN- oder LAN-Bus, bestehen. Die Steuergeräte und -systeme 3, 12 und 13 müssen nicht vorhanden sein. Falls sie es aber sind, ist es von Vorteil, wenn die Getriebesteuerung 6 auf die von ihnen gelieferten Sensorsignale (z. B. für die Raddrehzahlen) und davon abgeleitete Größen zugreifen kann.

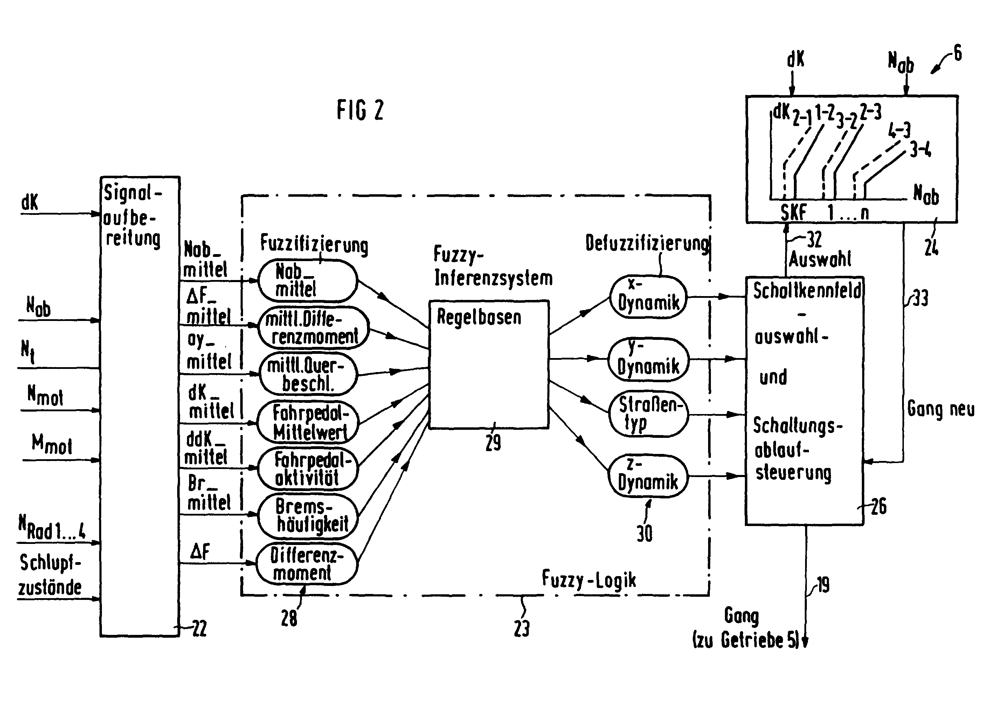

Die elektronische Steuerung 6 (Figur 2) weist folgende Bestandteile auf: eine Signalaufbereitungsschaltung (im folgenden abgekürzt: Signalaufbereitung) 22, eine Fuzzy-Logik-Steuerschaltung (im folgenden: Fuzzy-Logik) 23, einen Kennfeldspeicher 24 mit mehreren Schaltkennfeldern oder Getriebeübersetzungs-Tabellen und eine Schaltkennfeldauswahl- und Schaltungsablauf-Steuerung 26 (SKA/SA-T).

In der Signalaufbereitung 22 werden mehrere Eingangssignale aufbereitet, die von verschiedenen Sensoren oder von den erwähnten weiteren Steuergeräten geliefert werden. Die Eingangssignale werden dabei in von der Fuzzy-Logik 23 verarbeitbare charakteristische Größen gewandelt. Auf den in Figur 2 angedeuteten Eingangsleitungen gelangen (von oben nach unten) folgende Meßwerte oder Parameter als Eingangssignale zu der Signalaufbereitung 22: der sich in der Stellung der Drosselklappe oder allgemein des Fahrpedals niederschlagende Fahrerwunsch dK; die Getriebe-Abtriebsdrehzahl $N_{ab}$, die Turbinendrehzahl $N_t$ des Drehmomentwandlers; das Motordrehmoment $M_{mot}$; die Motordrehzahl $N_{mot}$; die Raddrehzahlen $N_{Rad1...4}$; und Schlupf zustands-Signale ("Schlupfzustände"). Diese Schlupf zustände können - alternativ zu einer Ermittlung aus den Raddrehzahlen - auch von der Radschlupfregelung 12 oder von dem Antiblockiersystem 13 geliefert werden. Die Steuerung 6 verfügt somit auch über Betriebsparameter oder Sensorsignale anderer Steuergeräte, falls solche vorhanden sind.

Fuzzy-Steuerungen als solche sind in der Literatur beschrieben (D. Abel: Fuzzy control - eine Einführung ins Unscharfe, AT 39 (1991) Heft 12). Durch die Fuzzifizierung werden die exakt bestimmten (engl. crisp) Größen der Eingangsparameter in linguistische Variablen abgebildet. Nachfolgend werden in einem Inferenzsystem in Form einer sog. Regelbasis abgelegte linguistische Regeln abgearbeitet und es wird eine unscharf formulierte Stellgröße bestimmt. In diesen Regeln (siehe Beispiel weiter hinten) ist das gewünschte Systemverhalten festgelegt. Die durch Inferenz bestimmte Stellgröße wird durch die Defuzzifizierung in eine physikalische Stellgröße - allgemein: "scharfe" Information - umgesetzt, die dann den zu steuernden Prozeß direkt beeinflußt. Die in der Signalaufbereitung 22 (Figur 2) in charakteristische Größen umgewandelten Meßwerte und abgeleiteten Größen gelangen über aus der Zeichnung ersichtliche Leitungen zu einem Fuzzifizierer 28 der Logik 23 und werden dort in linguistische Variablen umgesetzt und an das die Fuzzy-Regelbasis enthaltende Fuzzy-Inferenzsystem 29 übermittelt. Mit den in der Regelbasis definierten Regeln werden der Straßentyp und mit dem Verkehr auf der Straße zusammenhängende Größen berechnet. Die Fuzzy-Logik fungiert sozusagen als Experte zum Ermitteln solcher Größen.

Aus den oben genannten Eingangssignalen werden in der Signalaufbereitung 22 folgende Größen berechnet:

- Die mittlere Abtriebsdrehzahl $N_{ab}$-mittel, die bis auf einen konstanten Faktor der Fahrzeuggeschwindigkeit entspricht, und die in den Berechnungsformeln mit n_ab_m abgekürzt wird. Sie wird mit einer Schrittgröße von 32U/min entsprechend 1,085 km/h quantisiert.

- Ein mittlerer Betrag eines Differenzmomentes ΔF_mittel, abgekürzt m_d_m, das bis auf einen konstanten Faktor einer mittleren Differenzkraft entspricht und das eine Aussage über ein andauerndes Vorhandensein von Steigungen und Gefällen enthält. Die Quantisierung erfolgt mit einem Schritt von 2 Nm.

- Ein mittlerer Betrag der Querbeschleunigung ay_mittel, abgekürzt a_quer_m, der die andauernde Anwesenheit von Querbeschleunigung anzeigt und mit einem Schritt von 0,04m/s² quantisiert wird.

- Der Mittelwert der Drosselklappenstellung dK_mittel, abgekürzt dK quer, der dem Mittelwert der Fahrpedalstellung entspricht und mit einem Schritt von 0,182 Grad quantisiert wird.

- Die Bremshäufigkeit Br_mittel, abgekürzt br_m, die mit einem Schritt von 1/256 je Bremsung auf 200 ms quantisiert wird (= 160 nach 53 s Dauerbremsung).

Die Berechnung der Größen ΔF_mittel, ΔF und ddK_mittel wird bei Fahrzeugstillstand oder geringer Fahrzeuggeschwindigkeit ausgesetzt. Die Berechnung der Größen $N_{ab}$_mittel, ay_mittel und Br_mittel wird bei Fahrzeugstillstand ausgesetzt. Die Berechnung der Größe dK_mittel schließlich wird bei aktiver Lastadaption oder stehendem Fahrzeug ausgesetzt. Die Berechnung der vorstehend genannten Größen aus den Eingangssignalen erfolgt, soweit es sich um Mittelwerte handelt, durchgehend nach folgender Formel, wobei als Beispiel der Drosselklappen- oder Fahrpedalmittelwert dK-mittel dient:

$$dK\_mittel,n = (\Sigma dK,n - dK\_mittel,n-1) / p$$

hierin sind:

$$\Sigma dK,n = dK * k + \Sigma dK,n-1 \ ,$$

p die Anzahl der Berechnungszyklen, bis nach einer sprunghaften Änderung der Drosselklappenstellung dK ein neuer Mittelwert erreicht ist (z.B. p = 256), und
k ein Normierungsfaktor zur Bewertung des aktuellen dK-Wertes. Dabei ist k > 1 und n stellt den n-ten Berechnungszyklus dar.

Die Zeit zwischen zwei Berechnungszyklen beträgt 200 ms. Die vorstehende Formel stellt einen Filteralgorithmus dar, und zwar mit einer großen Zeitkonstante von 53 s (0 bis 63% des Endwertes), der infolgedessen eine angenäherte Mittelwertbildung darstellt, deren Genauigkeit für die vorliegende Steuerung vollkommen ausreicht. Berechnet werden nach dieser Formel auch der mittlere Betrag des Differenzmoments, der mittlere Betrag der Querbeschleunigung, die mittlere Abtriebsdrehzahl, die Fahrpedalaktivität und die Bremshäufigkeit.

Das Differenzmoment $\Delta F$ wird folgendermaßen berechnet:

$$\Delta F = F_b(t) - F_L(t) - F_R(t) - m_{Fzg} * \frac{d}{dt} n_{ab}(t) - F_{br}(t)$$

hierin sind - wobei die Größen jeweils auf die Getriebeabtriebswelle bezogen sind -:

| | |
|---|---|
| $F_b(t) =$ | das Antriebsmoment |
| $F_L(t) =$ | der Luftwiderstand |
| $F_R(t) =$ | der Rollwiderstand |
| $m_{Fzg} * \Delta N_{ab}(t) =$ | der Beschleunigungswiderstand und |
| $F_{br}(t) =$ | das Bremsmoment |

$\Delta F$ stellt die Bilanz der auf das Kraftfahrzeug einwirkenden Momente (oder Kräfte) am Getriebeabtrieb dar. In der Ebene muß sein Wert ohne äußere Last - z. B. Zuladung oder Anhängerbetrieb - gleich null sein. Ist sie es nicht, so läßt sich daraus eine erhöhte Fahrzeugmasse, eine Fahrbahn-Neigung und/oder eine äußere Last (Zuladung, Anhängerbetrieb usw.) erkennen.

Die Fahrzeug-Querbeschleunigung ay wird entweder aus von Drehzahlsensoren gelieferten Radgeschwindigkeiten berechnet oder von einem ABS- oder ASR-Steuergerät übernommen.

Die in der Signalaufbereitung 22 in charakteristische Größen umgewandelten Meßwerte und davon abgeleitete Größen gelangen über aus der Zeichnung ersichtliche Leitungen zu dem Fuzzifizierer 28 der Fuzzy-Logik 23 und werden dort in linguistische Variablen umgesetzt und als Eingangsvariablen an das Fuzzy-Inferenzsystem 29 übertragen. Dieses enthält eine oder mehrere Regelbasen, die noch zu erläutern sein werden, und durch die aus den genannten Eingangsgrößen folgende Ausgangsgrößen berechnet werden:

- eine erste Ausgangsvariable, die die Art einer befahrenen Straße charakterisiert ("Straßentyp") wird über eine erste Regelbasis (RB-Straße) aus einem Signal, das der Fahrzeuggeschwindigkeit entspricht oder einen Bremsvorgang anzeigt, ermittelt.

- Eine zweite Ausgangsvariable "x-Dynamik" enthält eine Information über den Verkehrsfluß, ob z.B. ein "Stop and go"-Verkehr (bei Stau), ein ungleichmäßiger Verkehr hoher Dichte oder ein gleichförmiger Verkehr stattfindet.

- Eine dritte Ausgangsvariable "y-Dynamik" enthält eine Information darüber, ob der Straßenverlauf kurvenreich ist.

- Mit einer vierten Ausgangsvariablen "z-Dynamik" wird der Steigungsanteil beschrieben, d.h. ob die befahrene Straße eben, hügelig oder ausgesprochen bergig ist. Die durch diese Größe dargestellte Schlußfolgerung "bergig" wird durch Bildung von Untermengen "konstant bergab" "konstant bergab, gebremst", "konstant bergauf" usw. differenziert, woraus sich die Möglichkeit ergibt, gezielte Steuerstrategien für das Getriebe einzusetzen. So kann z. B. die Getriebesteuerung bei "konstant bergab, gebremst" durch eine Rückschaltung die Motorbremswirkung erhöhen und notwendige Fahreingriffe verringern.

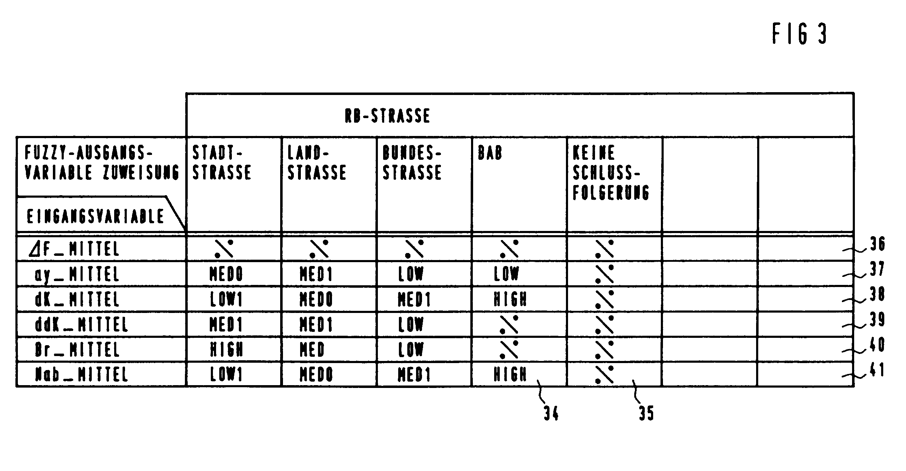

Die Regeln, die den Inhalt der Regelbasis Straße bilden, sind in einer Tabelle RB-Straße (Figur 3) dargestellt. Sämtliche Eingangsvariablen oder Prämissen in einer Spalte müssen mit einem logischen "UND" verknüpft sein, um eine Zuweisung zu der jeweils in der Kopfzeile darüber liegenden Ausgangsvariablen zu bewirken. So enthält z.B. die Spalte 34 (Figur 3) in ausgeschriebener Form folgende Fuzzy-Regel:

IF (ay_mittel IS Low) AND (dK_mittel IS High) AND ($N_{ab}$_mittel IS High) THEN Straße = BAB

Dies bedeutet, daß wenn die Bedingungen in den Zeilen 36 bis 41 von Spalte 34 alle gemeinsam erfüllt sind, der Fuzzy-Ausgangsvariablen der Wert BAB zugewiesen wird, daß es sich also bei der befahrenen Straße um eine Bundesautobahn handelt. Das Zeichen ".\·" bedeutet soviel wie "keine Bedingung", d.h. der Zustand der entsprechenden Eingangsgröße links am Rand der Tabelle ist beliebig.

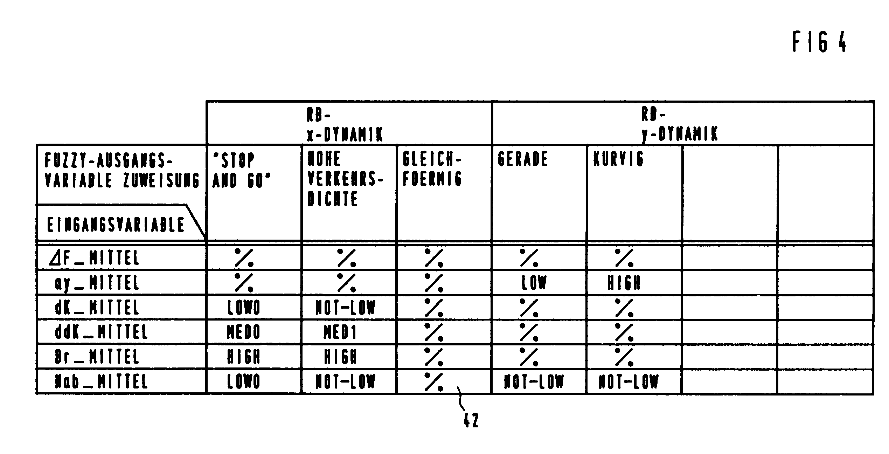

Die Regeln einer zweiten Regelbasis RB-x-Dynamik und einer dritten Regelbasis RB-y-Dynamik sind in weiteren Tabellen (Figur 4) niedergelegt, sie können aus dieser Tabelle direkt abgelesen werden.

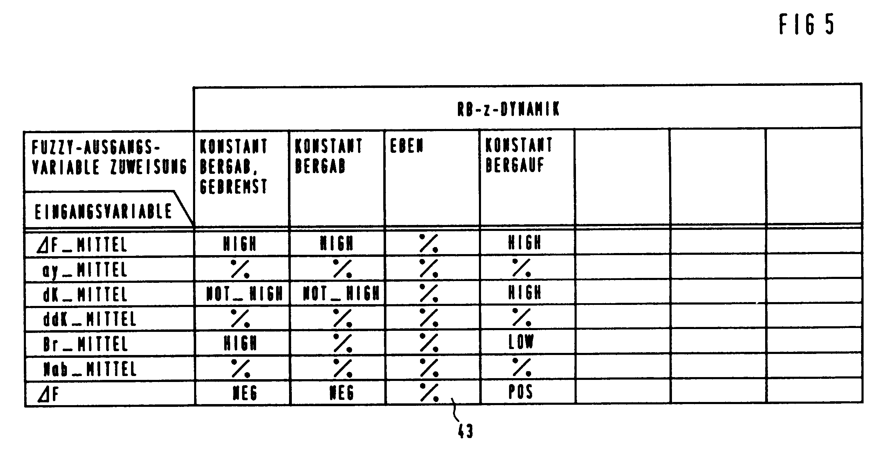

Entsprechendes gilt für eine vierte Regelbasis RB-z-Dynamik, die aus Figur 5 ersichtlich ist.

Die Regelbasen für die Variablen Straße, x-Dynamik und z-Dynamik enthalten jeweils in Spalte 35 (Figur 3), Spalte 42 (Figur 4) und Spalte 43 (Figur 5) eine ANY-Regel, die der Fuzzy-Ausgangsvariablen dann einen Wert zuweist, wenn keine Prämisse gültig ist, d.h. von keiner der Eingangsvariablen eine Bedingung erfüllt wird. Ein Beispiel hierfür ist (Figur 4):

IF ddK_mittel IS ANY THEN x-Dynamik = gleichförmig

Hierbei steht ddK_mittel für eine beliebige Eingangsvariable. Eine solche ANY-Regel ist notwendig, damit auch dann eine Aussage definiert ist, wenn anhand der anderen Regeln keine Identifikation (z.B. der Straße) möglich ist. Zum Beispiel sind nach einem Neustart der gesteuerten Einrichtung, z.B. der Getriebesteuerung nach dem Anlassen des Motors, keine Mittelwerte dK_mittel, Δ F_mittel usw. vorhanden. In diesem Fall wird dann in der vierten Regelbasis z-Dynamik die Schlußfolgerung "eben" getroffen.

In Figur 5 sind die Zugehörigkeitsfunktionen für die Variable Straße dargestellt. Für kleine Werte der Variablen wird keine Schlußfolgerung gezogen, für die weiteren Werte sind die Zugehörigkeitsanteile zu den verschiedenen Straßentypen aus der Figur zu ersehen.

Die Schlußfolgerungen aus den einzelnen Regeln werden dann nach den bekannten Fuzzy-Methoden (zum Beispiel nach dem Maxdot-Verfahren) überlagert und anschließend in dem Defuzzifizierer 30 defuzzifiziert, d.h. indiskrete oder "scharfe" Größen umgewandelt. Die Defuzzifizierung erfolgt z.B. nach der bekannten Schwerpunktmethode.

Die scharfen Ausgangsgrößen x-Dynamik, y-Dynamik, Straßentyp und z-Dynamik werden über aus Figur 2 ersichtliche Leitungen einer Schaltkennfeldauswahl- und Schaltungsablauf-Steuerung (abgekürzt SKA/SA-ST) 26 zugeführt. In der SKA/SA-ST 26 wird ein Signal "Auswahl" erzeugt und über eine Leitung 32 dem Kennfeldspeicher 24 zugeführt. Dieser Speicher empfängt außerdem die Signale Drosselklappenstellung dK und Getriebe-Abtriebsdrehzahl $N_{ab}$ und wählt anhand der drei Eingangssignale in bekannter Weise den jeweils einzulegenden Getriebegang oder die jeweils zu wählende Getriebeübersetzung. Ein entsprechendes Signal "Gang neu" gelangt über eine Leitung 33 zu der SKA/SA-ST und wird von dieser Steuerung 26, falls die Signale x-Dynamik, y-Dynamik, Straßentyp und z-Dynamik keine Sperrbedingung ergeben, als Stellgröße "Gang" über eine Leitung 19 dem automatischen Getriebe 5 zugeführt. In dem Getriebe bewirkt die Stellgröße das Einlegen eines neuen Ganges.

Die Erfindung ermöglicht es somit, bei der Festlegung der Stellgröße "Gang" neben den bekannten Eingangsgrößen Fahrerwunsch dK, Abtriebsdrehzahl $N_{ab}$ und neben anderen hier nicht beschriebenen Einflußgrößen auch den Straßentyp zu berücksichtigen und ermöglicht damit ein im Hinblick auf den Fahrkomfort und die Umweltverträglichkeit (geringer Kraftstoffverbrauch) verbessertes Schaltverhalten des automatischen Getriebes.

## Patentansprüche

1. Steuerung (6) für ein automatisches Getriebe(5) in einem Kraftfahrzeug, durch welche in Abhängigkeit von Fahrparametern, wie von der Fahrpedalstellung (dK) und der Fahrzeuggeschwindigkeit und gegebenenfalls weiteren Meßgrößen, eine Stellgröße zum Steuern der Übersetzung (Gang) des Getriebes (5) festgelegt wird, wobei die Steuerung (6) eine mit mindestens einer Regelbasis versehene Fuzzy-Logik (23) aufweist, durch welche anhand einer Auswertung der Fahrparameter eine die Art und mehrere den Verlauf der befahrenen Straße sowie den Verkehrsfluß charakterisierende Ausgangsvariable (Straßentyp; x-, y-, z-Dynamik) erzeugt werden, mit denen in einer Schaltkennfeldauswahl (26) ein Kennfeld ausgewählt wird, das bei der Festlegung der Übersetzung (Gang) des Getriebes verwendet wird.

2. Steuerung (6) nach Anspruch 1, dadurch gekennzeichnet, daß sie eine Signalaufbereitungsschaltung (22) aufweist, durch welche ein Signal ($N_{ab}$), das der Fahrzeuggeschwindigkeit entspricht, über eine vorgegebene Zeitspanne gemittelt ($N_{ab}$_mittel) und in einer ersten Regelbasis (RB-Straße) bei der Ermittlung einer die Art der befahrenen Straße charakterisierenden ersten Ausgangsvariablen (Straßentyp) verwendet wird.

3. Steuerung (6) nach Anspruch 1, dadurch gekennzeichnet, daß sie eine Signalaufbereitungsschaltung (22) aufweist, durch welche von einem Signal (Br), das einen Bremsvorgang anzeigt, über einen vorgegebenen Zeitraum (z) ein Mittelwert gebildet und dieser Mittelwert zur Ermittlung der die Art der befahrenen Straße charakterisierenden ersten Ausgangsvariablen (Straßentyp) verwendet wird.

4. Steuerung (6) nach Anspruch 1, dadurch gekennzeichnet, daß die Fuzzy-Logik (23) eine zweite Regelbasis (RB-x-Dynamik) aufweist, durch die eine zweite Ausgangsvariable (x-Dynamik) erzeugt wird, welche eine Information über den Verkehrsfluß auf der befahrenen Straße enthält.

5. Steuerung (6) nach Anspruch 1, dadurch gekennzeichnet, daß die Fuzzy-Logik (23) eine dritte Regelbasis (RB-y-Dynamik) aufweist, durch die eine dritte Ausgangsvariable (y-Dynamik) erzeugt wird, welche eine Information über die Kurvenhäufigkeit der befahrenen Straße enthält.

6. Steuerung (6) nach Anspruch 1, dadurch gekennzeichnet, daß die Fuzzy-Logik (23) eine vierte Regelbasis (RB-z-Dynamik) aufweist, durch die eine vierte Ausgangsvariable (z-Dynamik) erzeugt wird, welche eine Information über die Steigungshäufigkeit der befahrenen Straße enthält.

7. Steuerung (6) nach Anspruch 1, dadurch gekennzeichnet, daß durch die Fuzzy-Logik (23) zeitliche Mittelwerte oder Änderungen von Signalen (dK, ay, ddK), die Betriebszustände des Kraftfahrzeugs oder Fahrpedalbetätigungen wiedergeben, ausgewertet und zum Steuern der Übersetzung eines Kraftfahrzeuggetriebes verwendet werden.

8. Steuerung (6) nach Anspruch 1, dadurch gekennzeichnet, daß sie eine Signalaufbereitungsschaltung (22) aufweist, durch welche ein Signal (ddK), das die Fahrpedal- oder Drosselklappenstellung wiedergibt, über eine vorgegebene Zeitspanne (z) gemittelt und zur Erkennung der Art der befahrenen Straße (Straßentyp) verwendet wird.

9. Steuerung (6) nach Anspruch 6, dadurch gekennzeichnet, daß sie eine Signalaufbereitungsschaltung (22) aufweist, durch welche von dem Betrag eines Signals (ay), das der Querbeschleunigung des Kraftfahrzeugs entspricht, über einen vorgegebenen Zeitraum ein Mittelwert (ay_mittel) gebildet und dieser Mittelwert in der Fuzzy-Regelbasis (29) zur Ermittlung der ersten Ausgangsvariablen (Straßentyp) und der dritten Ausgangsvariablen (y-Dynamik) verwendet wird.

**Claims**

1. Controller (6) for an automatic gearbox (5) in a motor vehicle, by means of which a manipulated variable for controlling the transmission ratio (gear) of the gearbox (5) is defined as a function of driving parameters such as the accelerator pedal position (dK) and the speed of the vehicle and, if appropriate, further measured variables, the controller (6) having a fuzzy logic system (23) which is provided with at least one control base and by means of which an output variable which characterizes the type of road travelled on and a plurality of output variables which characterize the variation in the road travelled on as well as the traffic flow (road type; x-, y-, z-dynamics) are generated by means of an evaluation of the driving parameters, with which output variables a characteristic diagram which is used in defining the transmission ratio (gear) of the gearbox is selected in a control characteristic diagram selector (26).

2. Controller (6) according to Claim 1, characterized in that it has a signal conditioning circuit (22) by means of which a signal ($N_{ab}$) which corresponds to the vehicle speed is averaged ($N_{ab}$_average) over a prescribed time period and is used in a first control base (RB road) during the determination of a first output variable which characterizes the type of road travelled on (road type).

3. Controller (6) according to Claim 1, characterized in that it has a signal conditioning circuit (22) by means of which an average value is formed over a prescribed time period (z) by a signal (Br) which indicates a braking procedure, and this average value is used to determine the first output variable which characterizes the type of road travelled on (road type).

4. Controller (6) according to Claim 1, characterized in that the fuzzy logic system (23) has a second control base (RB-x dynamics), by means of which a second output variable (x dynamics) is produced, which contains an information item relating to the traffic flow on the road travelled on.

5. Controller (6) according to Claim 1, characterized in that the fuzzy logic system (23) has a third control base (RB-y dynamics), by means of which a third output variable (y dynamics) is produced, which contains an information item relating to the frequency of bends in the road travelled on.

6. Controller (6) according to Claim 1, characterized in that the fuzzy logic system (23) has a fourth control base (RB-z dynamics), by means of which a fourth output variable (z dynamics) is produced, which contains an information item relating to the frequency of gradients in the road travelled on.

7. Controller (6) according to Claim 1, characterized in that time-based average values or changes in signals (dK, ay, ddK) which represent operating states of the motor vehicle or accelerator pedal activations are evaluated by the fuzzy logic system (23) and are used to control the transmission ratio of a motor vehicle gearbox.

8. Controller (6) according to Claim 1, characterized in that it has a signal conditioning circuit (22) by means of which a signal (ddK), which represents the accelerator pedal position or throttle valve position, is averaged over a prescribed time period (z) and is used to detect the type of road travelled on (road type).

9. Controller (6) according to Claim 7, characterized in that it has a signal conditioning circuit (22) by means of which an average value (ay_average) of the absolute value of a signal (ay) which corresponds to the lateral acceleration of the motor vehicle is formed over a prescribed time period, and this average value is used in the fuzzy control base (29) to determine the first output variable (road type) and the third output variable (y dynamics).

## Revendications

1. Dispositif de commande (6) pour une boîte de vitesses automatique (5) d'un véhicule automobile, au moyen duquel une grandeur de réglage, servant à commander le rapport de démultiplication (vitesse de boîte) de la boîte de vitesses (5), est déterminée en fonction de paramètres de conduite, tels que la position de pédale d'accélérateur (dK) et la vitesse de véhicule et éventuellement d'autres grandeurs de mesure, le dispositif de commande (6) comportant un circuit à logique floue (23), pourvu d'au moins une base de règles, au moyen duquel sont produites, à l'aide d'une analyse des paramètres de conduite, des variables de sortie (type de voie ; comportement-dynamique-suivant- x, comportement-dynamique-suivant- y, comportement-dynamique-suivant- z), l'une caractérisant la nature de la voie parcourue et plusieurs caractérisant le tracé de la voie parcourue, ainsi que le flux de circulation, variables de sortie au moyen desquelles est sélectionnée, dans un circuit de sélection de table caractéristique de passage de vitesse (26), une table caractéristique qui est utilisée lors de la détermination du rapport de démultiplication (vitesse de boîte) de la boîte de vitesses.

2. Dispositif de commande (6) suivant la revendication 1, caractérisé en ce qu'il comporte un circuit générateur de signaux (22) au moyen duquel un signal ($N_{ab}$) qui correspond à la vitesse de véhicule fait l'objet d'une formation de moyenne ($N_{ab}$_moyenne) sur l'étendue d'un intervalle de temps préfixé et est utilisé dans une première base de règles (RB-voie) lors de la détermination d'une première variable de sortie caractérisant la nature de la voie parcourue (type de voie).

3. Dispositif de commande (6) suivant la revendication 1, caractérisé en ce qu'il comporte un circuit générateur de signaux (22) au moyen duquel, à partir d'un signal (Br) qui indique une opération de freinage, une moyenne est formée sur l'étendue d'un intervalle de temps préfixé (z) et cette moyenne est utilisée pour la détermination de la première variable de sortie caractérisant la nature de la voie parcourue (type de voie).

4. Dispositif de commande (6) suivant la revendication 1, caractérisé en ce que le circuit à logique floue (23) comporte une deuxième base de règles (RB-comportement-dynamique-suivant-x) au moyen de laquelle est produite une deuxième variable de sortie (comportement-dynamique-suivant- x) qui contient une information concernant le flux de circulation sur la voie parcourue.

5. Dispositif de commande (6) suivant la revendication 1, caractérisé en ce que le circuit à logique floue (23) comporte une troisième base de règles (RB-comportement-dynamique-suivant-y) au moyen de laquelle est produite une troisième variable de sortie (comportement-dynamique-suivant- y) qui contient une information concernant la fréquence de virages de la voie parcourue.

6. Dispositif de commande (6) suivant la revendication 1, caractérisé en ce que le circuit à logique floue (23) comporte une quatrième base de règles (RB-comportement-dynamique-suivant-z) au moyen de laquelle est produite une quatrième variable de sortie (comportement-dynamique-suivant- z) qui contient une information concernant la fréquence de montées de la voie parcourue.

7. Dispositif de commande (6) suivant la revendication 1, caractérisé en ce qu'au moyen du circuit à logique floue (23), des moyennes dans le temps ou des variations dans le temps de signaux (dK, ay, ddK) qui reproduisent les états de fonctionnement du véhicule automobile ou les actionnements de pédale d'accélérateur sont analysées et utilisées pour commander le rapport de démultiplication d'une boîte de vitesses de véhicule.

8. Dispositif de commande (6) suivant la revendication 1, caractérisé en ce qu'il comporte un circuit générateur de signaux (22) au moyen duquel un signal (ddK) qui reproduit la position de pédale d'accélérateur ou la position de papillon des gaz fait l'objet d'une formation de moyenne sur l'étendue d'un intervalle de temps préfixé (z) et est utilisé pour la reconnaissance de la nature de la voie parcourue (type de voie).

9. Dispositif de commande (6) suivant la revendication 7, caractérisé en ce qu'il comporte un circuit générateur de signaux (22) au moyen duquel une moyenne (ay_moyenne) est formée, sur l'étendue d'un intervalle de temps préfixé, à partir de la valeur d'un signal (ay) qui correspond à l'accélération transversale du véhicule automobile et cette moyenne est utilisée dans la base de règles floue (29) pour la détermination de la première variable de sortie (type de voie) et de la troisième variable de sortie (comportement dynamique suivant-y).

## FIG 1

## FIG 6

FIG 2

FIG 3

EP 0 626 527 B1

| FUZZY-AUSGANGS-VARIABLE ZUWEISUNG<br><br>EINGANGSVARIABLE | RB-STRASSE | | | | | | |
|---|---|---|---|---|---|---|---|
| | STADT-STRASSE | LAND-STRASSE | BUNDES-STRASSE | BAB | KEINE SCHLUSS-FOLGERUNG | | |
| $\Delta$F_MITTEL | ⊠ | ⊠ | ⊠ | ⊠ | ⊠ | | |
| ay_MITTEL | MEDO | MED1 | LOW | LOW | ⊠ | | |
| dK_MITTEL | LOW1 | MEDO | MED1 | HIGH | ⊠ | | |
| ddK_MITTEL | MED1 | MED1 | LOW | ⊠ | ⊠ | | |
| Br_MITTEL | HIGH | MED | LOW | ⊠ | ⊠ | | |
| Nab_MITTEL | LOW1 | MEDO | MED1 | HIGH | ⊠ | | |

34    35

36
37
38
39
40
41

FIG 4

| FUZZY-AUSGANGS-VARIABLE ZUWEISUNG<br><br>EINGANGSVARIABLE | RB-<br>x-DYNAMIK | | | RB-<br>y-DYNAMIK | | | |
|---|---|---|---|---|---|---|---|
| | "STOP AND GO" | HOHE VERKEHRS-DICHTE | GLEICH-FOERMIG | GERADE | KURVIG | | |
| $\Delta$F_MITTEL | ⁒ | ⁒ | ⁒ | ⁒ | ⁒ | | |
| ay_MITTEL | ⁒ | ⁒ | ⁒ | LOW | HIGH | | |
| dK_MITTEL | LOW0 | NOT-LOW | ⁒ | ⁒ | ⁒ | | |
| ddK_MITTEL | MED0 | MED1 | ⁒ | ⁒ | ⁒ | | |
| Br_MITTEL | HIGH | HIGH | ⁒ | ⁒ | ⁒ | | |
| Nab_MITTEL | LOW0 | NOT-LOW | ⁒ | NOT-LOW | NOT-LOW | | |

42

EP 0 626 527 B1

FIG 5

EP 0 626 527 B1

| FUZZY-AUSGANGS-VARIABLE ZUWEISUNG / EINGANGSVARIABLE | RB-z-DYNAMIK | | | | | | |
|---|---|---|---|---|---|---|---|
| | KONSTANT BERGAB, GEBREMST | KONSTANT BERGAB | EBEN | KONSTANT BERGAUF | | | |
| $\Delta$F_MITTEL | HIGH | HIGH | ./. | HIGH | | | |
| ay_MITTEL | ./. | ./. | ./. | ./. | | | |
| dK_MITTEL | NOT_HIGH | NOT_HIGH | ./. | HIGH | | | |
| ddK_MITTEL | ./. | ./. | ./. | ./. | | | |
| Br_MITTEL | HIGH | ./. | ./. | LOW | | | |
| Nab_MITTEL | ./. | ./. | ./. | ./. | | | |
| $\Delta$F | NEG | NEG | ./. | POS | | | |

43